# EUROPEAN PATENT SPECIFICATION

(11) **EP 0 870 390 B1**
(45) Date of publication and mention of the grant of the patent: **14.11.2001**
(21) Application number: 96941545.4
(22) Date of filing: 18.12.1996
(51) Int. Cl.: H04M 3/22, H04M 3/36, H04M 3/10

(54) **CALL TRAFFIC BASED EXCEPTION GENERATING SYSTEM**
AUSNAHMEGENERIERUNGSSYSTEM BASIERT AUF ANRUFVERKEHR
SYSTEME DE GENERATION D'EXCEPTIONS EN FONCTION DU TRAFIC DES APPELS

(30) Priority: 26.12.1995 US 9223 P; 10.04.1996 US 630642
(43) Date of publication of application: 14.10.1998
(73) Proprietor: Nortel Networks Limited, Montreal, Quebec H2Y 3Y4 (CA)
(72) Inventor: KAYALIOGLU, Inanc, Nepean, Ontario K2H 5V3 (CA); MCBRAYNE, John, Andrew, Ottawa, Ontario K2B 8P1 (CA); SHEIDAFAR, Maryam, M., Kanata, Ontario K2L 3Y3 (CA); SAUDER, Steven, L., Nepean, Ontario K2J 3Y8 (CA)
(74) Representative: Berkson, Michael David
(86) International application number: CA9600851
(87) International publication number: WO9724854

(56) References cited:
- EP-A- 0 541 145
- EP-A- 0 708 573
- DE-A- 2 743 235
- GB-A- 1 502 415
- US-A- 3 866 185
- BELL SYSTEM TECHNICAL JOURNAL (USA), SEPT. 1978, vol. 57, no. 7, pt.2, USA, pages 2575-2587, XP000674018 MESSERLI E J: "An Approximation for the variance of the UPCO offered load estimation"
- BELL SYSTEM TECHNICAL JOURNAL,USA , APRIL 1977, vol. 56, no. 4, pages 561-573, XP000674019 HILL D W: "The effects of traffic load variation on measurement accuracy"

## Description

### Background of the Invention

This invention relates, generally, to systems for monitoring telecommunication networks and, in particular, to a central office switch monitoring system that generates exceptions based on thresholding call traffic.

Conventional central office switching systems typically are equipped with self-monitoring capabilities whereby certain irregular and undesirable events are identified and logged as problems. Time based thresholding of such events in order to generate exception reports is generally known. Event thresholding are traditionally made by monitoring occurrences of events over predetermined time intervals. For example, if at least twenty-five occurrences of particular problem event happen within a thirty minute time window, then an exception report relating to that problem is generated.

Time based thresholding is deficient in that it may not precisely reflect the severity of a problem under varying volumes of call traffic at the central office switch. In other words, a certain number of problem event occurrences may be considered as being acceptable when call traffic is relatively high but the same number of occurrences happening in a low traffic context may be indicative of a significant problem requiring attention. Exception generation based solely on time can not distinguish between these two scenarios; as long as the occurrence threshold is reached within the specified time interval an exception report will be issued whereas in the first scenario such is not warranted.

EP-A-0541145 discloses a monitoring system for monitoring a telecommunication network containing one or more subscriber exchanges. From a series of call records a statistical value for each parameter is calculated, the calculated values are then compared with a threshold value. In the case of an excessive discrepancy between the calculated statistical value and the threshold value an error message is generated.

EP-A-0541145 further discloses two methods by which to calculate the statistical value of a parameter over a fixed number p of call records. The first method, referred to as a "jumping window", recalculates the value of the parameter after p call records have been generated since the previous calculation of the value. The second method, referred to as "moving window", calculates the value of the parameter from p call records after each new call record is generated. In both methods it is the call records that are monitored. The value of the parameter is statistically calculated from p call records and an error message generated if the value of the parameter has an excessive discrepancy with a threshold value.

It is, therefore, desirable to have a system that performs thresholding based on office traffic as an alternative technique for generating exceptions.

### Summary of the Invention

It is an object of the present invention to provide a new and improved call traffic based monitoring system of central office switch.

The invention, therefore, according to a first broad aspect provides a method of generating an indication when a threshold is exceeded, comprising the steps of defining a window of call traffic volume; maintaining a count; generating the indication after the count reaches the threshold, characterised in that an indication is generated when occurrences of an event exceed said threshold, said method including the step of monitoring for an occurrence of the event (Log Y), and said step of maintaining a count comprising maintaining a count of the event (Log Y) occurrences which happen within the window.

In accordance with a second broad aspect, the invention provides a system for generating an indication when a threshold is exceeded, comprising means for defining a window of call traffic volume; means for maintaining a count; and means for generating the indication after the count reaches the threshold; characterised in that the system generates an indication when occurrences of an event exceed said threshold, said system including means for monitoring for an occurrence of the event (Log Y), and said means for maintaining a count maintaining a count of the event (Log Y) occurrences which happen within the window.

### Brief Description of the Drawings

The invention will be better understood from the following description of a call traffic based exception generating system together with reference to the accompanying drawings, in which:
Figure 1 is a block diagram representation of the call traffic based exception generating system;
Figure 2, which comprises 2A and 2B, is a flowchart manifesting operation of the system; and
Figure 3 is a chart of call traffic illustrating examples of call traffic based exception generation.

### Detailed Description

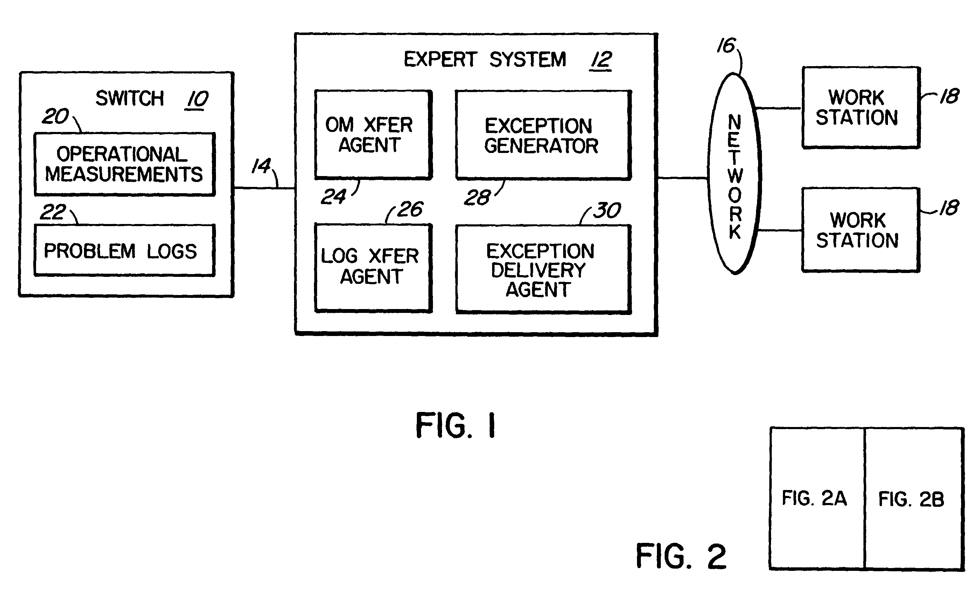

Referring to Figure 1, illustrated is a representation of a central office switch 10 and an expert system (ES) 12 which are communicatively coupled over link 14. The ES 12 is also connected to a network 16, such as a local area and wide area network, to which multiple workstations 18 are shown connected.

The switch 10 is equipped with conventional capabilities for generating operational measurements (OMs) 20 and problem logs 22. The OMs 20 are produced by the switch 10 as peg counts of various events. Peg counts in physical terms are data registers which are incremented in response to event occurrences. Events relating to switch traffic, for instance, are number of incoming calls and number of originating calls. The problem logs 22 are produced by the switch to identify various events, some of which relate to malfunctioning of the switch 10. Northern Telecom's DMS SuperNode is an example of the switch 10 capable of generating the OMs 20 and the problem logs 22, and includes an interface whereby this data may be retrieved by adjunct devices, such as the ES 12, connected thereto.

The ES 12 is a rule based processing platform which utilizes the OMs 20 in conjunction with logs 22 of the switch 10 to perform traffic based thresholding for the purpose of exception generation. Functionality executed within the ES 12 includes OM transfer agent 24, log transfer agent 26, exception generator 28 and exception delivery agent 30. The OM transfer agent 24 and the log transfer agent 26 function to retrieve, via the link 14, the OMs 20 and the problem logs 22, respectively, which data is provided as input to the exception generator 28. The exception generator 28 is an application to monitor certain types of logs coming from the switch 10 and apply call traffic based thresholding rules thereto. For instance, if a predefined limit of a particular problem log is reached within a certain volume of call traffic (e.g., 5 logs in 10,000 calls), the exception generator 28 will generate an exception report. Determining the traffic may be effected by monitoring the peg counts of the OMs 20 which are related to the number of calls handled by the switch 10. The exception generator 28 periodically queries the switch 10, through the OM transfer agent 24 and the log transfer agent 26, at regular time intervals in order to retrieve the call traffic peg counts from the OMs 20 and the problem logs 22. The specific log types that are to be monitored together with corresponding occurrence and traffic volume limits for each type are identified in a database maintained by the ES 12. The exception delivery agent 30 will output generated exception report for routing through the network 16, for example, to one of workstations 18 which are monitored by telco maintenance personnel so that appropriate action may be taken. Northern Telecom's SuperNode Data Manager (SDM) product is an example of a hardware platform that may be appropriately programmed to provide the expert system 12.

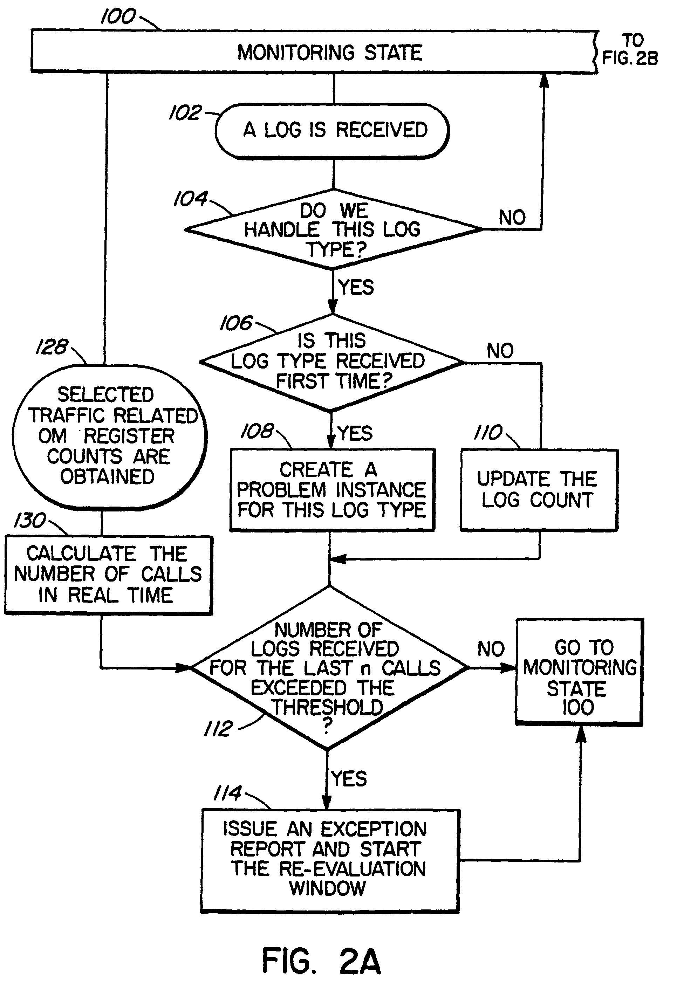

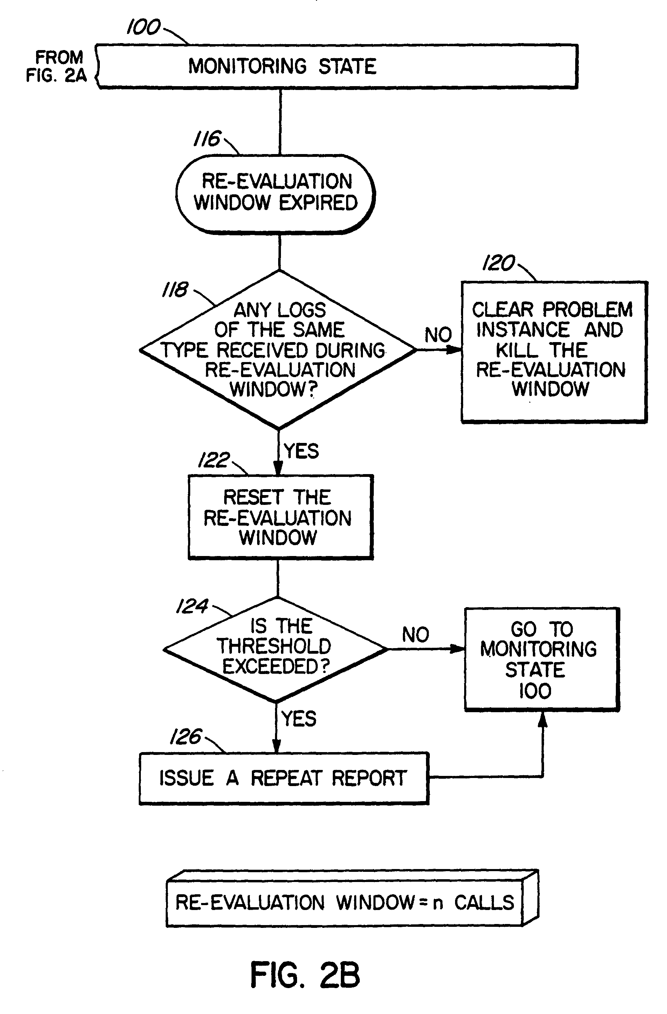

Referring to Figures 1 and 2 together, the steps executed by the ES 12 to implement the call traffic based exception generating system are described in the following.

In the monitoring state, step 100, the ES 12 is monitoring switch logs and OMs.

When a log is received, at step 102, the ES 12 in step 104 checks its database to see if this log type is handled. If the answer is NO, the ES 12 returns to the monitoring state, step 100. If the answer at step 104 is YES, the ES 12 checks at step 106 to see if this log type was received for the first time by searching its database for an existing problem instance having a log type matching the received type. If the answer is YES, i.e. no matching log type, in step 108 a new problem instance is created and recorded in which is the number of calls when the log occurred to note this occurrence of the log type. Each problem instance is assigned a unique problem identifier. Otherwise, if the answer at step 106 is NO, the log count reflected in the already existing problem instance is increased by one at step 110 by recording the call traffic volume for this occurrence. As each additional log with the same log type is received, the ES 12 check to see how many we have received in the last n number of calls (e.g., last 10000 calls) at step 112 by subtracting n from current call traffic count thereby defining a sliding call traffic window. If we have now exceeded the threshold level of the problem within the window, the ES 12 issues an exception report at step 114 from which execution returns to the monitoring state 100. Otherwise, for a NO answer at step 112 execution proceeds directly to step 100 where the ES 12 continues to monitor for more logs. Exception reports are transmitted over the network 16, for example, to maintenance personnel at the workstations 18.

Following issuance of the exception report, in step 114, a re-evaluation window is started and fixed to the call traffic number at which the log occurred that resulted in the exception report. Together with invoking a timer, the ES 12 waits for n more calls to occur and either when that many calls are made or the timer times-out, the re-evaluation window expires at step 116. The ES 12 then checks if any more logs of the same log type were received since the last report, at step 118. If no more logs were received, the problem no longer needs to be tracked so the ES 12, at step 120, may delete the problem instance but the unique problem identifier associated with that instance will not be reused. If some logs were received but the number does not exceed the threshold n, the re-evaluation window is reset whereby the ES 12 again employs a sliding window of call traffic volume and starts a new count for n calls, step 122, and checks to see if the number of logs received since the last report exceeded the threshold, step 124. If the value exceeds the threshold in the last n calls, a repeat notification exception with the same problem identifier is generated in step 126 from which execution returns to the monitoring state, step 100. If, at step 124, the value is greater than zero but does not exceed the threshold, then no action is taken by the ES 12 which continues to monitor for more logs in step 100. For repeat notification exceptions generated in step 126, the ES 12 will issue a repeat report transmitted over network 16 to one of the workstations 18. If the re-evaluation window, which was reset by the ES 12 in step 122, expires then same steps starting from 116 are repeated.

The ES 12, at step 128, also monitors selected traffic related OMs 20 and in step 130 calculates the number of calls in real time. This number is used in steps 112 and 116.

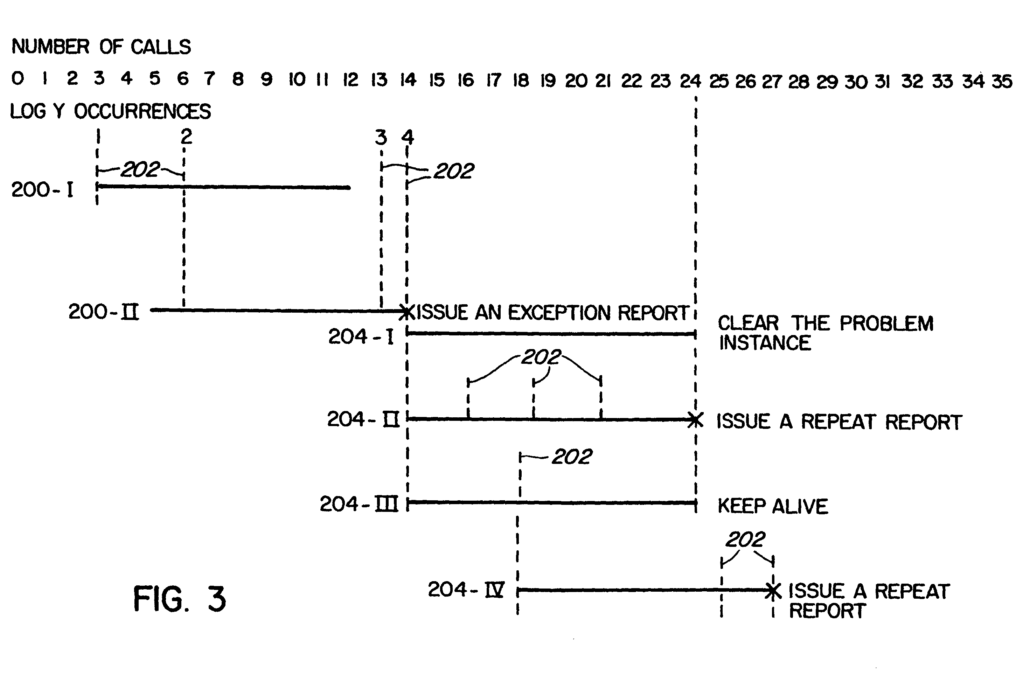

Turning now to Figure 3, shown is a call traffic chart to exemplify the traffic based exception generating operation of the ES 12 in Figure 1 and explained by Figure 2. Assume thresholding limits of 3 occurrences within a traffic window of 10 calls for a particular problem event, identified as Log Y. Horizontal lines labeled 200 represent a sliding call traffic window of 10 calls and vertical lines labeled 202 each represent an occurrence of Log Y. Horizontal lines labeled 204 represent a fixed window of 10 calls occurring after the issuance of a prior exception report.

A first exception report is issued at call count 14 (i.e., 14th call of call traffic volume). The first occurrence of Log Y at call count 3 does not contribute to the issuance of the first exception report since the third log appears at the 13th call. In other words, only two Log Y type events happen within the 10 call window of line 200-I. The exception log is issued on the fourth Log Y at call count 14 because three logs (i.e., logs 2, 3 and 4 at counts 6, 13 and 14, respectively) occur between the 5th and 14th calls, indicated on line 200-II.

Following generation of the first exception report, any of four possible scenarios may occur. No further Log Y type events may happen in the next ten calls, as indicated by line 204-I, which results in the problem instance being cleared. Line 202-II represent that another three (and possibly more) Log Y events happen during the next 10 calls, resulting in issuance of a repeat report which identifies the same problem. If only one (or two but not three) further Log Y occurs as shown on line 204-III, then the problem instance is maintained to monitor for Log Y events within the sliding 10 call window. Line 204-IV is a continuation of line 204-III and shows two more Logs appearing in its call base window, resulting in the issuance of a repeat report with the same problem identified.

Those skilled in the art will recognize that various modifications and changes could be made to the invention without departing from the scope thereof. For instance, the call traffic based exception generating system could be readily incorporated within the central office switch instead of residing on an external adjunct processing platform. Also, other indications or signals may be generated such that the problem may be dealt with by automation or in addition to an exception report. It should therefore be understood that the claims are not to be considered as being limited to the precise embodiment of the system set forth above.

## Claims

1. A method of generating an indication when a threshold is exceeded, comprising the steps of:
defining a window (200, 204) of call traffic volume;
maintaining a count; and
generating the indication after the count reaches the threshold,
**characterised in that** an indication is generated when occurrences of an event exceed said threshold, said method including the step of monitoring for an occurrence of the event (Log Y), and said step of maintaining a count comprising maintaining a count of the event (Log Y) occurrences which happen within the window.

2. A method as claimed in claim 1, wherein the window represents a sliding window (200-I, -II) which in effect moves with incremental call traffic volume.

3. A method as claimed in claim 2, comprising the further steps of:
defining a fixed window (204-I, -II, -III) of call traffic volume and which begins at the event occurrence within the sliding window (200-II) that results in generation of the indication;
maintaining a count of the event occurrences which happen within the fixed window; and
generating another indication after the fixed window (204-II) count reaches the threshold.

4. A system for generating an indication when a threshold is exceeded, comprising:
means for defining a window (200, 204) of call traffic volume;
means for maintaining a count; and
means for generating the indication after the count reaches the threshold; **characterized in that** the system generates an indication when occurrences of an event exceed said threshold, said system including means for monitoring for an occurrence of the event (Log Y), and said means for maintaining a count maintaining a count of the event (Log Y) occurrences which happen within the window.

5. A system as claimed in claim 4, wherein the window represents a sliding window (200-I, -II) which in effect moves with incremental call traffic volume.

6. A system as claimed in claim 5, further comprising:
means for defining a fixed window (204-I, -II, -III) of call traffic volume and which begins at the event occurrence within the sliding window (200-II) that results in generation of the indication;
means for maintaining a count of the event occurrences which happen within the fixed window; and
means for generating another indication after the fixed window (200-II) count reaches the threshold.

## Patentansprüche

1. Verfahren zur Erzeugung einer Anzeige, wenn ein Schwellenwert überschritten ist, mit den folgenden Schritten:
Festlegen eines Fensters (200, 204) an Gesprächsverbindungs-Verkehrsvolumen;
Führen einer Zählung, und
Erzeugen einer Anzeige, nachdem die Zählung den Schwellenwert erreicht,
**dadurch gekennzeichnet, daß** eine Anzeige erzeugt wird, wenn Vorfälle eines Ereignisses den Schwellenwert überschreiten, wobei das Verfahren den Schritt der Überwachung auf ein Vorfallen des Ereignisses (Log Y) einschließt und der Schritt der Überwachung einer Zählung das Führen einer Zählung der Ereignis- (Log Y-) Vorfälle umfaßt, die sich in dem Fenster ereignen.

2. Verfahren nach Anspruch 1, bei dem das Fenster ein gleitendes Fenster (200-I, -II) darstellt, das sich im Ergebnis mit inkrementalem Gesprächsverbindungs-Verkehrsvolumen bewegt.

3. Verfahren nach Anspruch 2, das weiterhin die folgenden Schritte umfaßt:
Festlegen eines festen Fensters (204-I, -II, -III) an Gesprächsverbindungs-Verkehrsvolumen, das an dem Ereignisvorfall in dem gleitenden Fenster (200-II) beginnt, das zur Erzeugung der Anzeige führt,
Führen einer Zählung der Ereignisvorfälle, die innerhalb des festen Fensters erfolgen, und
Erzeugen einer weiteren Anzeige, nachdem die Zählung in dem festen Fenster (204-II) den Schwellenwert erreicht.

4. System zur Erzeugung einer Anzeige, wenn ein Schwellenwert überschritten ist, mit:
Einrichtungen zur Festlegung eines Fensters (200, 204) an Gesprächsverbindungs-Verkehrsvolumen;
Einrichtungen zum Führen einer Zählung, und
Einrichtungen zur Erzeugung einer Anzeige, nachdem die Zählung den Schwellenwert erreicht,
**dadurch gekennzeichnet, daß** das System eine Anzeige erzeugt, wenn Vorfälle eines Ereignisses den Schwellenwert überschreiten, wobei das System Einrichtungen zur Überwachung auf ein Vorfallen des Ereignisses (Log Y) einschließt und die Einrichtungen zum Führen einer Zählung eine Zählung der Ereignis- (Log Y-) Vorfälle führen, die sich in dem Fenster ereignen.

5. System nach Anspruch 4, bei dem das Fenster ein gleitendes Fenster (200-I, -II) darstellt, das sich im Ergebnis mit inkrementalem Gesprächsverbindungs-Verkehrsvolumen bewegt.

6. System nach Anspruch 5, das weiterhin folgendes umfaßt:
Einrichtungen zum Festlegen eines festen Fensters (204-I, -II, -III) an Gesprächsverbindungs-Verkehrsvolumen, das bei dem Ereignisvorfall in dem gleitenden Fenster (200-II) beginnt, das zu der Erzeugung der Anzeige führt,
Einrichtungen zum Führen einer Zählung der Ereignisvorfälle, die in dem festen Fenster auftreten, und
Einrichtungen zur Erzeugung einer weiteren Anzeige, nachdem die Zählung in dem festen Fenster (200-II) den Schwellenwert erreicht.

## Revendications

1. Procédé pour générer une indication lorsqu'un seuil est dépassé, comportant les étapes consistant à :
définir une fenêtre (200, 204) d'un volume de trafic d'appels,
tenir un compte, et
générer l'indication après que le compte ait atteint le seuil, **caractérisé en ce qu'**une indication est générée lorsque les apparitions d'un événement ont dépassé ledit seuil, ledit procédé comportant l'étape consistant à surveiller l'apparition de l'événement (Log Y), et ladite étape consistant à surveiller un compte comportant la tenue d'un compte des apparitions de l'événement (Log Y) qui ont eu lieu dans la fenêtre.

2. Procédé selon la revendication 1, dans lequel la fenêtre représente une fenêtre coulissante (200-I, -II) qui se déplace en effet avec un volume de trafic d'appels incrémental.

3. Procédé selon la revendication 2, comportant de plus les étapes consistant à :
définir une fenêtre fixe (204-I, -II, -III) d'un volume de trafic d'appels et qui commence à l'apparition d'un événement dans la fenêtre coulissante (200-II) qui a pour résultat la génération de l'indication,
tenir un compte des apparitions d'événement qui ont eu lieu dans la fenêtre fixe, et
générer une autre indication après que le compte de la fenêtre fixe (204-II) ait atteint le seuil.

4. Système pour générer une indication lorsqu'un seuil est dépassé, comportant :
des moyens pour définir une fenêtre (200, 204) de volume de trafic d'appels,
des moyens pour tenir un compte, et
des moyens pour générer l'indication après que le compte ait atteint le seuil, **caractérisé en ce que** le système génère une indication lorsque les apparitions d'un événement ont dépassé ledit seuil, ledit système comportant des moyens pour surveiller une apparition de l'événement (Log Y), et lesdits moyens pour tenir un compte tiennent un compte des apparitions de l'événement (Log Y) qui ont eu lieu dans la fenêtre.

5. Système selon la revendication 4, dans lequel la fenêtre représente une fenêtre coulissante (200-I, -II) qui se déplace en effet avec un volume de trafic d'appels incrémental.

6. Système selon la revendication 5, comportant de plus :
des moyens pour définir une fenêtre fixe (204-I, -II, -III) d'un volume de trafic d'appels, et qui commence à l'apparition d'un événement dans la fenêtre coulissante (200-II) qui a pour résultat la génération de l'indication,
des moyens pour tenir un compte des apparitions d'événement qui ont eu lieu dans la fenêtre fixe, et
des moyens pour générer une autre indication après que le compte de la fenêtre fixe (200-II) ait atteint le seuil.
